# EUROPÄISCHE PATENTSCHRIFT

(11) **EP 2 813 600 B1**
(45) Veröffentlichungstag und Bekanntmachung des Hinweises auf die Patenterteilung: **28.11.2018**
(21) Anmeldenummer: 13171387.7
(22) Anmeldetag: 11.06.2013
(51) Int. Cl.: C25B 15/02, C25B 15/08, C25B 1/12, C25B 9/00, H01M 8/06, H01M 8/18, H01M 8/04, H01M 8/0656, H01M 8/04089

(54) **Redox-Vorrichtung mit einer Druckanpassungseinheit**
Redox device with a pressure adapting unit
Dispositif redox doté d'une unité d'ajustement de pression

(43) Veröffentlichungstag der Anmeldung: 17.12.2014
(73) Patentinhaber: Airbus Defence and Space GmbH, 82024 Taufkirchen (DE)
(72) Erfinder: JEHLE, Walter, 88263 Horgenzell (DE); LUCAS, Joachim, 88634 Herdwangen-Schönach (DE)
(74) Vertreter: Daub, Thomas

(56) Entgegenhaltungen:
- EP-A1- 0 082 591
- GB-A- 484 054
- US-A- 3 379 634
- US-A- 3 574 084
- US-A- 3 839 091
- US-A- 4 528 251
- US-A1- 2007 034 523

## Beschreibung

### Stand der Technik

Die Erfindung betrifft eine Druckanpassungseinheit nach dem Oberbegriff des Anspruchs 1.

Bei im Stand der Technik üblichen Druckanpassungseinheiten, die zu einer Anpassung von Fluiddrücken von Fluiden in unterschiedlichen, im Wesentlichen voneinander getrennten Fluidräume vorgesehen sind, werden aktiv gesteuerte Ventile, insbesondere Ablassventile, verwendet, um eine Anpassung der Fluiddrücke zu erreichen. Insbesondere wird bei einem Aufbau eines Überdrucks in einem der Fluidräume Fluid aus dem Fluidraum, in dem sich der Überdruck ausbildet, abgelassen. Alternativ lassen Durchschlagventile Fluid bei Überschreitung eines Grenzdrucks in einem der Fluidräume ab. Eine Druckanpassung mittels der üblichen Druckanpassungseinheiten bewirkt einen Masseverlust und erfordert zudem meist eine aktive Drucküberwachung in den Fluidräumen. Für geschlossene Systeme, in denen ein Ersatz von Masseverlusten von Fluiden nicht vorgesehen ist, sind solche Druckanpassungseinheiten nicht einsetzbar.

In US 4,528,251 A wird eine Differentialdruckanpassungseinheit für ein Brennstoffelement offenbart, bei der, anstelle einer Vorrichtung zum Steuern des Differenzdrucks zwischen Zellenelektroden durch eine Ventilbetätigung, eine Druckdifferenzsteuerung verwendet wird. Wenn eine Druckschwankung in einer Zellenelektrode auftritt, wird automatisch eine Druckänderung der anderen Zellenelektrode herbeigeführt, um den Differenzdruck zwischen den Zellenelektroden auf einem vorbestimmten Niveau zu halten.

In US 3,839,091 A wird eine regenerative Brennstoffzelle offenbart, bei der während des Betriebs der Druckgradient zwischen den Zellen über den Austausch von Wasser beziehungsweise Wasserdampf geregelt wird. Der Wasserdampf kann aufgrund der wechselnden Elektrolytkonzentrationen über Durchgänge zwischen den Zellen diffundieren.

Die Aufgabe der Erfindung besteht insbesondere darin, eine Druckanpassungseinheit mit einer masseverlustfreien Realisierung einer Druckanpassung bereitzustellen. Ferner ist es Aufgabe der Erfindung, eine passive Druckanpassungseinheit, die eine Druckanpassung ohne aktive Druckmessung und Ansteuerung von Druckausdehnungselementen vornimmt, bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Es wird eine Redox-Vorrichtung, insbesondere Wasserstoff-Sauerstoff-Redox-Vorrichtung, mit zumindest einer Redox-Einheit, die zur Durchführung zumindest einer Redoxreaktion unter Verbrauch und/oder Erzeugung von einem ersten Gas, insbesondere von Wasserstoffgas, und/oder von einem zweiten Gas, insbesondere von Sauerstoffgas, vorgesehen ist, mit zumindest einem ersten Gasraum für das erste Gas und zumindest einem zweiten Gasraum für das zweite Gas, und mit einer Druckanpassungseinheit zu einer Anpassung von Fluiddrücken in zumindest einem ersten Fluidraum und in zumindest einem zweiten, zumindest im Wesentlichen von dem ersten Fluidraum getrennten Fluidraum innerhalb zumindest eines Druckintervalls, insbesondere zu einer zumindest weitgehenden Vermeidung eines relativen Überdrucks in einem der Fluidräume, mit zumindest einem ersten Druckausdehnungselement, das dazu vorgesehen ist, ein Raumvolumen des zumindest einen ersten Fluidraums zu verändern, mit zumindest einem zweiten Druckausdehnungselement, das dazu vorgesehen ist, ein Raumvolumen des zumindest einen zweiten Fluidraums zu verändern, und mit zumindest einer Druckkoppeleinheit, die dazu vorgesehen ist, eine Gegenkopplung von Raumvolumenänderungen des zumindest einen ersten Fluidraums und des zumindest einen zweiten Fluidraums zu bewirken, vorgeschlagen.

Unter einer "Druckanpassungseinheit" soll insbesondere eine Einheit verstanden werden, die dazu vorgesehen ist, Fluiddrücke in zumindest einem ersten Fluidraum und in zumindest einem zweiten, zumindest im Wesentlichen von dem ersten Fluidraum getrennten Fluidraum anzupassen und insbesondere bei einer Erhöhung eines Fluiddrucks des Fluids in dem zumindest einen ersten Fluidraum oder dem zumindest einen zweiten Fluidraum gegenüber dem zumindest einen zweiten Fluidraum oder dem zumindest einen ersten Fluidraum den Raumdruck in dem ersten Fluidraum oder dem zumindest einen zweiten Fluidraum zu erniedrigen und/oder den Raumdruck in dem zweiten Fluidraum oder dem zumindest einen ersten Fluidraum zu erhöhen. Grundsätzlich kann die Druckanpassungseinheit zu einer Anpassung des Fluiddrucks durch Veränderung einer Fluidmenge in einem konstanten Raumvolumen des zumindest einen ersten Fluidraums und/oder des zumindest einen zweiten Fluidraums oder eine Veränderung eines Raumvolumens des zumindest einen ersten Fluidraums und/oder des zumindest einen zweiten Fluidraums bei einer konstanten Fluidmenge erreichen. Unter einem "Fluid" soll insbesondere ein Gas oder eine Flüssigkeit verstanden werden. Unter einem "Fluidraum" soll insbesondere ein Raum verstanden werden, der zu einer Aufnahme eines Gases und/oder einer Flüssigkeit vorgesehen ist. Vorzugsweise sind der erste Fluidraum und der zweite Fluidraum mit verschiedenen Gasen und/oder Flüssigkeiten gefüllt. Unter "zumindest im Wesentlichen voneinander getrennte Fluidräume" soll insbesondere verstanden werden, das ein erster Fluidraum und ein zweiter Fluidraum fluidströmungstechnisch vollständig voneinander getrennt sind oder über ein Verbindungselement, das einen Fluidstrom zumindest verringert und somit einen Druckausgleich zumindest verlangsamt, beispielsweise eine elektrolytgefüllte Membran zwischen zwei als Gasräumen ausgebildeten Fluidräumen, in und/oder an der eine Reaktion zwischen Gasen aus dem ersten Fluidraum und dem zweiten Fluidraum stattfindet, wobei ein Gasstrom in und durch die Membran möglich ist und ein großer Gasstrom durch die Membran von einem Gasraum zu dem anderen Gasraum zu einer Verdrängung und/oder Auswaschung eines Elektrolyten aus der Membran führt.

Unter einer "Anpassung von Fluiddrücken innerhalb zumindest eines Druckintervalls" soll insbesondere verstanden werden, dass eine Anpassung von Fluiddrücken in einem vorgegebenen Bereich stattfindet und insbesondere das nach Überschreitung eines Maximalfluiddrucks oder einer Maximalfluiddruckdifferenz eine Anpassung der Fluiddrücke durch die Druckanpassungseinheit nicht weiter erreicht werden kann, beispielsweise aufgrund einer Erreichung einer maximalen Ausdehnung eines Raumvolumens eines Fluidraums. Unter einem "relativen Überdruck" soll insbesondere eine Druckdifferenz zwischen Fluiddrücken von zwei Fluidräumen, insbesondere zwischen Fluiddrücken von zwei zumindest im Wesentlichen getrennten Fluidräumen, verstanden werden. Unter einer "zumindest weitgehenden Vermeidung eines relativen Überdrucks" soll insbesondere verstanden werden, dass ein sich ausbildender relativer Überdruck durch die Druckanpassungseinheit innerhalb maximal vier Sekunden, vorteilhaft innerhalb maximal zwei Sekunden und bevorzugt innerhalb maximal einer Sekunde angepasst und die Druckdifferenz verringert wird. Unter einem "Druckausdehnungselement" soll insbesondere ein einen Fluidraum zumindest teilweise begrenzendes Element verstanden werden, das bei Erhöhung eines Fluiddrucks des Fluidraums zumindest verschoben und/oder expandierend verformt wird, so dass ein Raumvolumen des Fluidraums vergrößert wird, und bei einer Druckausübung auf eine von dem Fluidraum abgewandte Seite das Raumvolumen des Fluidraums verringert wird. Insbesondere ist das Druckausdehnungselement als ein verschiebbarer Kolben, eine expandierbare und zusammendrückbare Hülle oder als ein verformbarer Balg ausgebildet. Unter einer "Druckkoppeleinheit" soll insbesondere eine Einheit verstanden werden, die einen Druck, der auf das erste Druckausdehnungselement wirkt, insbesondere einen Fluiddruck im ersten Fluidraum, auf das zweiten Druckausdehnungselement überträgt, wobei der Druck vorzugsweise mit einer entgegengesetzten Wirkrichtung übertragen wird. Insbesondere weist die Druckkoppeleinheit hierzu ein Übertragungselement, beispielsweise einen Druckkolben, oder einen mit einem Druckübertragungsfluid gefüllten Kanal auf, wobei das Druckübertragungsfluid an das erste Druckausdehnungselement und das zweite Druckausdehnungselement angrenzt. Insbesondere bewirkt die Druckkoppeleinheit ohne eine zusätzliche Ansteuerung durch eine Steuereinheit automatisch eine Übertragung von Drücke von dem ersten Druckausdehnungselement auf das zweite Druckausdehnungselement und umgekehrt und ist somit passiv ausgebildet. Es kann insbesondere eine einfache und konstruktiv unaufwendige passive Druckanpassung erreicht werden.

Erfindungsgemäß wird vorgeschlagen, dass die Druckkoppeleinheit zumindest ein Druckübertragungsfluid, insbesondere Wasser, umfasst, wobei die Druckkoppeleinheit einen Druck, der auf das zumindest erste Druckausdehnungselement wirkt, insbesondere einen Fluiddruck in dem zumindest einen ersten Fluidraum, auf das zweite Druckausdehnungselement überträgt, wobei der Druck mit einer entgegengesetzten Wirkrichtung übertragen wird. Unter einem "Druckübertragungsfluid" soll insbesondere eine Flüssigkeit verstanden werden, die zumindest einem Kanal ausfüllt, der sich zwischen dem ersten Druckausdehnungselement und dem zweiten Druckausdehnungselement erstreckt, und die aufgrund einer Inkompressibilität einen durch das erste Druckausdehnungselement oder das zweite Druckausdehnungselement auf sich wirkenden Druck an das zweite Druckausdehnungselement oder das erste Druckausdehnungselement überträgt. Es kann insbesondere eine konstruktionstechnisch unaufwendige Druckkoppeleinheit erreicht werden.

Alternativ wird vorgeschlagen, dass die Druckkoppeleinheit eine gemeinsame Wandung des ersten Druckausdehnungselements und des zweiten Druckausdehnungselements umfasst. Es kann insbesondere unmittelbar ein Druck übertragen und eine besonders einfach konstruierte Druckkoppeleinheit erreicht werden.

Erfindungsgemäß wird vorgeschlagen, dass das zumindest eine erste Druckausdehnungselement und das zumindest eine zweite Druckausdehnungselement als Metallfaltbälge ausgebildet sind. Unter einem "Metallfaltbalg" soll insbesondere ein aus einem Metall hergestellter Balg verstanden werden, der einen Innenhohlraum für eine Aufnahme eines Fluids aufweist, der durch eine ausdehnbare Metallhülle umgeben ist. Insbesondere ist die ausdehnbare Metallhülle aus überlappenden Elementen hergestellt, die gegeneinander verschiebbar sind und bei Erhöhung eines Innendrucks gegeneinander verschoben werden und somit eine Ausdehnung des Innenhohlraums erlauben. Vorzugsweise ist der Metallfaltbalg aus Edelstahl hergestellt. Insbesondere weisen die Metallfaltbälge Federkonstanten zwischen fünfhundert Newton pro Meter und zehntausend Newton pro Meter auf, wobei in Abhängigkeit von den Fluiden in den Fluidräumen Metallfaltbälge mit passenden Federkonstante ausgewählt werden. Es kann insbesondere ein Druckausdehnungselement erreicht werden, bei dem auf zusätzliche Dichtelemente verzichtet werden kann und das auch bei Füllung der Fluidräume mit Fluiden mit hohen Temperaturen verwendet werden kann.

Weiterhin wird vorgeschlagen, dass die Druckanpassungseinheit zumindest ein drittes Druckausdehnungselement, das über die Druckkopplungseinheit mit dem ersten Druckausdehnungselement und dem zweiten Druckausdehnungselement gekoppelt ist, umfasst. Es kann insbesondere mit reduziertem apparativen Aufwand eine Druckanpassung von zumindest drei Fluidräumen erreicht werden.

Unter einer "Redox-Vorrichtung" soll insbesondere eine Vorrichtung mit zumindest einer Redox-Einheit verstanden werden. Unter einer "Redox-Einheit" soll eine Einheit mit zumindest zwei Elektroden, wovon vorzugsweise eine als eine Wasserstoffelektrode und eine als eine Sauerstoffelektrode ausgebildet ist, einem die zwei Elektroden verbindenden Stromkreis, zumindest ein zumindest zwischen den zwei Elektroden angeordnetes Elektrolyt und/oder einer zumindest zwischen den zwei Elektroden angeordneten elektrolytgefüllten oder ionenleitenden Membran verstanden werden, wobei mittels der Einheit eine Redox-Reaktion durchgeführt wird, bei der unter Energieabgabe in Form von elektrischer Leistung, die über den Stromkreis abgegeben wird, das erste Gas oxidiert und das zweite Gas reduziert und in einer Reaktion zu einem Produktstoff, vorzugsweise Wasser, umgesetzt werden und in einer Reaktion zu einem Produktstoff, vorzugsweise Wasser, umgesetzt wird, welches in eine Umgebung oder einen Speichertank abgeben wird, oder bei der unter Aufwendung von Energie in Form von elektrischer Leistung ein Eduktstoff, vorzugsweise Wasser, zu einer Erzeugung von einem ersten Gas, vorzugsweise molekularem Wasserstoff, und einem zweiten Gas, vorzugsweise molekularem Sauerstoff, gespalten wird und das erste Gas und das zweite Gas in die Umgebung oder in Speichertanks abgeführt werden. Insbesondere ist die Redox-Einheit als eine Brennstoffzelle, bei der unter Energieabgabe durch Stromerzeugung molekularer Wasserstoff, vorzugsweise in Form von Wasserstoffgas, und molekularer Sauerstoff, vorzugsweise in Form von Sauerstoffgas, zu Wasser reagieren, und/oder als ein Elektrolyseur für Wasserstoff und Sauerstoff, bei dem unter Energieaufnahme durch einen elektrischen Strom Wasser in molekularen Sauerstoff und molekularen Wasserstoff gespalten wird, ausgebildet. Grundsätzlich kann anstelle von Wasser als Produktstoff oder Eduktstoff ein anderer chemischer Stoff, welcher Wasserstoffatome und Sauerstoffatome enthält, verwendet werden. Beispielsweise kann die Redox-Einheit anstatt als Wasserstoff-Sauerstoff-Redox-Einheit als eine Redox-Einheit für andere Stoffe, die die anderen Stoffe in einer zu der Redoxreaktion der Wasserstoff-Sauerstoff-Redox-Einheit ähnlichen Redoxreaktion umsetzt, ausgebildet sein, beispielsweise als eine Kohlenmonoxid-Sauerstoff-Redox-Einheit, die Kohlenmonoxid und Sauerstoffgas zu Kohlendioxid umsetzt oder Kohlendioxid in Kohlenmonoxid und Sauerstoffgas spaltet. Insbesondere ist die Redox-Einheit als Hochdruck-Redox-Einheit ausgebildet, die bei einem internen Druck in Gasräumen von zumindest sechzig bar, vorteilhaft zumindest achtzig bar und bevorzugt zumindest hundert bar betrieben wird. Unter einer "Redoxreaktion" soll insbesondere eine Reaktion verstanden werden, bei der zumindest zwei chemische Stoffe miteinander reagieren, wobei zumindest ein chemischer Stoff Elektronen abgibt und somit oxidiert wird, und zumindest ein chemischer Stoff Elektronen aufnimmt und somit reduziert wird. Unter "Wasserstoffgas" soll insbesondere Wasserstoff in molekularer Form, der als Gas vorliegt, verstanden werden. Unter "Sauerstoffgas" soll insbesondere Sauerstoff in molekularer Form, der als Gas vorliegt, verstanden werden. Unter einem "Elektrolyten" soll insbesondere ein ionenleitender Stoff, vorzugsweise in Form einer Lösung, beispielsweise einer alkalischen Lösung, verstanden werden. Es kann insbesondere bei einem Anfahren der Redox-Vorrichtung ein Aufbau eines relativen Überdrucks und eine Beschädigung der Membran vermieden werden.

Weiterhin wird vorgeschlagen, dass die Druckanpassungseinheit zumindest ein drittes Druckausdehnungselement aufweist, das dazu vorgesehen ist, ein Raumvolumen eines dritten Fluidraums zu verändern. Es kann insbesondere eine Druckanpassung von Drücken in Fluidräumen für zwei Edukte oder Produkte und ein Produkt oder Edukt erreicht werden.

Erfindungsgemäß wird vorgeschlagen, dass die Redox-Vorrichtung zumindest eine weitere Redox-Einheit, die mit der zumindest einen Redox-Einheit stofflich gekoppelt ist, umfasst. Unter "stofiflich gekoppelt" soll insbesondere verstanden werden, dass Produktstoffe der zumindest einen Redox-Einheit als Eduktstoffe der zumindest einen weiteren Redox-Einheit genutzt werden und Produktstoffe der zumindest einen weiteren Redox-Einheit als Eduktstoffe der einen Redox-Einheit genutzt werden und/oder dass die zumindest eine Redox-Einheit und die zumindest eine weitere Redox-Einheit einen gemeinsamen Eduktvorrat und/oder Produktvorrat aufweisen und ein Strom von Eduktstoffen in mehreren gleichartig ausgebildeten Redox-Einheiten geführt wird. Insbesondere sind die zumindest eine Redox-Einheit und die zumindest eine weitere Redox-Einheit als ein Brennstoffzellen-Elektrolyseur-Paar ausgebildet. Es kann insbesondere eine Nutzung nicht vollständig umgesetzter Eduktstoffe erreicht oder ein regeneratives Brennstoffzellensystem bereitgestellt werden.

Erfindungsgemäß wird vorgeschlagen, dass die Redox-Vorrichtung eine weitere Druckanpassungseinheit zu einer Anpassung von Fluiddrücken der zumindest einen weiteren Redox-Einheit umfasst. Es kann insbesondere eine sichere Anpassung von Fluiddrücken, insbesondere bei einem Anfahren, beider Redox-Einheiten erreicht werden.

Des Weiteren wird vorgeschlagen, dass die zumindest eine Redox-Einheit und die zumindest eine weitere Redox-Einheit als regeneratives Brennstoffzellsystem ausgebildet sind. Unter einem "regenerativen Brennstoffzellsystem" soll insbesondere verstanden werden, dass die Redox-Vorrichtung zumindest ein Paar von einer als Brennstoffzelle ausgebildeten Redox-Einheit und zumindest einer an die zumindest eine Brennstoffzelle gekoppelte, als Elektrolyseur für Wasserstoff und Sauerstoff ausgebildeten Redox-Einheit aufweist, wobei in einem Aufladevorgang zu einer Energiespeicherung in dem regenerativen Brennstoffzellsystem mittels eines angelegten äußeren elektrischen Stroms der zumindest eine Elektrolyseur für Wasserstoff und Sauerstoff Wasser aus einem Wasservorrat in molekularen Wasserstoff und molekularen Sauerstoff spaltet, wobei der molekulare Wasserstoff und der molekulare Sauerstoff jeweils in Speichertanks abgeführt wird und in einem Entladevorgang zu einer Energieabgabe über elektrischen Strom molekularer Wasserstoff und molekularer Sauerstoff in der zumindest einen Brennstoffzelle zu Wasser reagieren. Das regenerative Brennstoffzellsystem erfüllt somit eine Funktion eines Akkumulators. Insbesondere kann das regenerative Brennstoffzellsystem für einen geschlossenen Betrieb ausgebildet sein. Unter einem "geschlossenen Betrieb" soll insbesondere ein Betrieb verstanden werden, bei dem das regenerative Brennstoffzellsystem über eine Vielzahl von Auflade-Entlade-Zyklen ohne Stoffaustausch mit einer Umgebung betrieben wird. Unter einem "Betrieb ohne Stoffaustausch mit der Umgebung" soll insbesondere verstanden werden, dass das regenerative Brennstoffzellsystem mit einem Anfangsvorrat von Wasser und/oder molekularem Sauerstoff und/oder molekularem Wasserstoff in Speichertanks ausgestattet ist, wobei über die Vielzahl von Auflade-Entlade-Zyklen lediglich der Anfangsvorrat an Wasser und/oder molekularem Sauerstoff und/oder molekularem Wasserstoff umgesetzt wird und eine Ergänzung des Anfangsvorrats nicht stattfindet. Insbesondere ist bei einem Betrieb ohne Stoffaustausch mit der Umgebung eine Entnahme der Speichertanks nicht vorgesehen. Es kann insbesondere ein regeneratives Brennstoffzellsystem mit einer hohen Betriebssicherheit erreicht werden.

Weiterhin wird ein Verfahren zur Druckregelung unter Verwendung einer erfindungsgemäßen Redox-Vorrichtung vorgeschlagen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische Darstellung des Funktionsprinzips einer erfindungsgemäßen Druckanpassungseinheit,
- Fig. 2: eine Redox-Vorrichtung mit einer Redox-Einheit und der erfindungsgemäßen Druckanpassungseinheit,
- Fig. 3: eine als regeneratives Brennstoffzellsystem ausgebildete Redox-Vorrichtung mit zwei erfindungsgemäßen Druckanpassungseinheiten und
- Fig. 4: eine schematische Darstellung einer alternativen erfindungsgemäßen Druckanpassungseinheit.

### Beschreibung der Ausführungsbeispiele

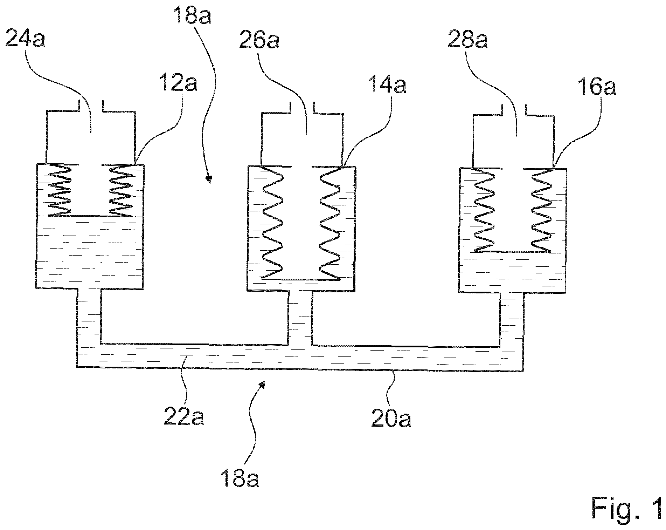

Fig. 1 zeigt eine schematische Darstellung einer erfindungsgemäßen Druckanpassungseinheit 10a zu einer Anpassung von Fluiddrücken in einem ersten Fluidraum 24a und in zumindest einem zweiten, zumindest im Wesentlichen von dem ersten Fluidraum 24a getrennten Fluidraum 26a innerhalb zumindest eines Druckintervalls, insbesondere zu einer zumindest weitgehenden Vermeidung eines relativen Überdrucks in einem der Fluidräume 24a, 26a, mit einem ersten Druckausdehnungselement 12a, das dazu vorgesehen ist, ein Raumvolumen des zumindest einen ersten Fluidraums 24a zu verändern, mit einem zweiten Druckausdehnungselement 14a, das dazu vorgesehen ist, ein Raumvolumen des zumindest einen zweiten Fluidraums 26a zu verändern, und mit zumindest einer Druckkoppeleinheit 18a, die dazu vorgesehen ist, eine Gegenkopplung von Raumvolumenänderungen des zumindest einen ersten Fluidraums 24a und des zumindest einen zweiten Fluidraums 26a zu bewirken. Die Druckkoppeleinheit 18a überträgt hierzu eine Ausdehnung des Druckausdehnungselements 12a entgegengesetzt auf das Druckausdehnungselement 14a und umgekehrt, so dass bei einer Ausdehnung eines der Druckausdehnungselemente 12a, 14a das andere Druckausdehnungselement 14a, 12a komprimiert wird. Zu einer Übertragung der Ausdehnungen der Druckausdehnungselemente 12a, 14a entgegengesetzt aufeinander und somit der Fluiddrücke umfasst die Druckkoppeleinheit 18a ein Druckübertragungsfluid 22a. Das Druckübertragungsfluid 22a ist von Wasser gebildet und füllt einen Druckübertragungsfluidkanal 20a aus, der die Druckausdehnungselemente 12a, 14a umgibt. Das erste Druckausdehnungselement 12a und das zweite Druckausdehnungselement 14a sind als Metallfaltbälge aus Edelstahl mit jeweils einem Hohlraum, der einen Teil des ersten Fluidraums 24a oder des zweiten Fluidraums 26a bildet, ausgebildet. Das erste Druckausdehnungselement 12a und das zweite Druckausdehnungselement 14a weisen eine Federkonstante von eintausend Newton pro Meter auf. Die Druckanpassungseinheit 10a umfasst ferner ein drittes Druckausdehnungselement 16a, das über die Druckkoppeleinheit 18a mit dem ersten Druckausdehnungselement 12a und dem zweiten Druckausdehnungselement 14a gekoppelt ist, so dass die Druckanpassungseinheit 10a Fluiddrücke von drei Fluidräumen 24a, 26a, 28a ausgleicht. Die Druckanpassungseinheit 10a kann Fluiddruckdifferenzen in einem Druckintervall, das durch eine maximale Ausdehnung der Druckausdehnungselemente 12a, 14a, 16a gegeben ist, anpassen. Übersteigen Fluiddruckdifferenzen einen Grenzwert, der zu einem Überschreiten einer maximalen Ausdehnung eines der Druckausdehnungselemente 12a, 14a, 16a und somit zu einem Reißen eines der Druckausdehnungselemente 12a, 14a, 16a führt, so kann eine Druckanpassung nicht weiter vorgenommen werden.

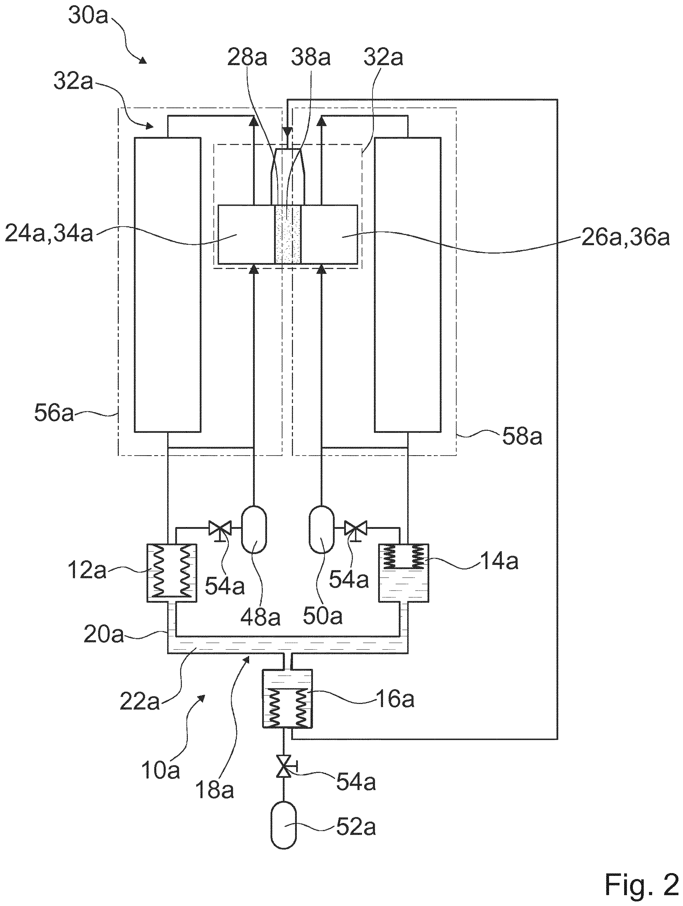

In einer Anwendung der erfindungsgemäßen Druckanpassungseinheit 10a wird diese zu einer Anpassung von Fluiddrücken einer Redox-Vorrichtung 30a eingesetzt (Fig. 2). Die Redox-Vorrichtung 30a weist eine Redox-Einheit 32a, die zur Durchführung von zumindest einer Redoxreaktion unter Erzeugung von einem von Wasserstoffgas gebildeten ersten Gas und von einem von Sauerstoffgas gebildeten zweiten Gas vorgesehen ist und dabei ein von Wasser gebildetes Edukt elektrolytisch spaltet, mit einem ersten Gasraum 34a für das erste Gas und mit einem zweiten Gasraum 36a für das zweite Gas, und eine erfindungsgemäße Druckanpassungseinheit 10a zu einer Anpassung eines Fluiddrucks von dem ersten Gasraum 34a und dem zweiten Gasraum 36a auf, die nach dem in Fig. 1 dargestellten schematischen Funktionsprinzip funktioniert. Die Redox-Einheit 32a ist somit als Elektrolyseur für Wasserstoffgas und Sauerstoffgas ausgebildet. Die Druckausdehnungselemente 12c, 14c sind von Metallfaltbälgen gebildet, die mit Gasseiten der Redox-Einheit 32a verbunden sind und somit einen Teil des ersten Gasraums 34a und des zweiten Gasraums 36a bilden. Die Gasräume 34a, 36a bilden somit die Fluidräume 24a, 26a, deren Fluiddrücke mittels der Druckanpassungseinheit 10a angepasst werden. Eine Anpassung der Fluiddrücke der Fluidräume 24a, 26a, wird insbesondere bei einem Anfahren der Redox-Vorrichtung 30a vorgenommen.

Der erste Gasraum 34a und der zweite Gasraum 36a der Redox-Einheit 32a sind durch eine elektrolytgefüllte Membran 38a voneinander getrennt und somit im Wesentlichen voneinander getrennt. Insbesondere ist ein direkter Gasaustausch zwischen den Gasräumen 34a, 36a nicht möglich, da die Gase zuerst die Membran 38a passieren müssen, und bei einem Druckanstieg in einem der Gasräume 34a, 36a wird durch ein sich ausbildendes Druckgefälle nach Überschreitung eines Grenzdrucks Elektrolyt aus der Membran 38a verdrängt. Die Redox-Einheit 32a ist als alkalischer Hochdruck-Elektrolyseur mit einer Kaliumhydroxid-Lösung als Elektrolyt, die in der Membran 38a fixiert ist, und die bei Gasdrücken in einem Bereich zwischen achtzig und hundert bar und bei einer Betriebstemperatur in einem Temperaturbereich von etwa achtzig bis zweihundert Grad Celsius betrieben wird, ausgebildet. Grundsätzlich kann die Redox-Vorrichtung 30a auch eine Redox-Einheit 32a umfassen, die für einen Betrieb bei niedrigeren oder höheren Fluiddrücken oder bei niedrigeren oder höheren Fluiddrücken ausgelegt ist und/oder die einen von Kaliumhydroxid verschiedenen Elektrolyten aufweist. Die elektrolytgefüllte Membran 38a ist zwischen zwei Elektroden angeordnet. Die Redox-Einheit 32a wird in einem Betrieb mittels einer nicht dargestellten Gleichstromquelle mit elektrischen Strom versorgt und spaltet mittels des elektrischen Stroms in Reaktionszonen, die von Kontaktzonen der Elektroden und der elektrolytgefüllten Membran 38a gebildet sind, elektrolytisch Wasser, das aus einem als Wasserspeicher ausgebildeten Flüssigkeitsspeicher 52a der Membran 38a zugeführt wird, in molekularen Wasserstoff und molekularen Sauerstoff. Molekularer Wasserstoff und molekularer Sauerstoff werden anschließend in Gaskreisläufe 56a, 58a umgepumpt und in Gasspeichern 48a, 50a gespeichert. In einem Nichtbetriebszustand sind die Gasräume 34a, 36a mit Restgas mit einem Druck von etwa einem bar befüllt. Bei einem Anfahren der Redox-Einheit 32a erhöht sich rasch ein Druck in den Gasräumen 34a, 36a. Kommt es dabei zu einer Ausbildung eines Druckgefälles, beispielsweise aufgrund von Leckagen auf einer Gasseite der Redox-Einheit 32a, so kann nach einer Überschreitung einer Grenz-Druckdifferenz der fixierte Elektrolyt aus der Membran 38a verdrängt werden, wodurch die Redox-Einheit 32a beschädigt wird. Durch die Druckanpassungseinheit 10a wird jedoch bei einer relativen Druckerhöhung in einem der Gasräume 34a, 36a gegenüber dem anderen der Gasräume 34a, 36a das einen Teil des jeweiligen Gasraums 34a, 36a bildende Druckausdehnungselement 12a, 14a ausgedehnt, wodurch ein Raumvolumen des jeweiligen Gasraums 34a, 36a vergrößert und somit ein Fluiddruck des jeweiligen Gasraums 34a, 36a verringert wird. Über die Druckkoppeleinheit 18a der Druckanpassungseinheit 10a wird eine Gegenkopplung von Raumvolumenänderung des jeweiligen Gasraums 34a, 36a mit Raumvolumenänderungen des jeweils anderen Gasraums 36a, 34a bewirkt, indem eine Raumvolumenvergrößerung des jeweiligen Gasraums 34a, 36a einen Druck auf ein Druckübertragungsfluid 22a, das in einem Druckübertragungsfluidkanal 20a der Druckkoppeleinheit 18a geführt ist, ausübt, welches aufgrund einer Inkompressibilität als Flüssigkeit diesen Druck auf das Druckausdehnungselement 14a, 12a des jeweils anderen Gasraums 36a, 34a ausübt und dieses komprimiert, wodurch eine Raumvolumenverringerung und Fluiddruckerhöhung des jeweils anderen Gasraums 36a, 34a bewirkt wird. Ein Aufbau einer zu großen Druckdifferenz zwischen den Gasräumen 34a, 36a wird somit vermieden. Die Druckausdehnungselemente 12a, 14a sind als Metallfaltbälge aus Edelstahl ausgebildet und weisen eine Federkonstante von eintausend Newton pro Meter auf. Über Überdruckventile 54a wird bei einem Überschreiten eines maximalen Fluiddrucks in den Druckausdehnungselementen 12a, 14a Gas aus den Fluidräumen 24a, 26a in die Gasspeicher 48a, 50a abgelassen, um einer Beschädigung der Druckausdehnungselemente 12a, 14a vorzubeugen.

Die Druckanpassungseinheit 10a weist ein drittes Druckausdehnungselement 16a auf, das dazu vorgesehen ist, ein Raumvolumen eines dritten Fluidraums 28a, der von einem wassergefüllten Raum der Redox-Einheit 32a gebildet ist, zu verändern. Das dritte Druckausdehnungselement 16a ist über die Druckkoppeleinheit 18a mit dem ersten Druckausdehnungselement 12a und dem zweiten Druckausdehnungselement 14a gekoppelt. Über das dritte Druckausdehnungselement 16a wird bei einer Zuleitung von Wasser zu der Membran 38a bei einem Anfahren der Redox-Einheit 32a der Redox-Vorrichtung 30a ein Fluiddruck in den Gasräumen 34a, 36a durch die Druckanpassungseinheit 10a erhöht, so dass ein Betriebsdruck rascher erreicht wird als ohne das dritte Druckausdehnungselement 16a. Das dritte Druckausdehnungselement 16a ist als Metallfaltbalg aus Edelstahl ausgeführt und weist eine Federkonstante von siebentausend Newton pro Meter auf.

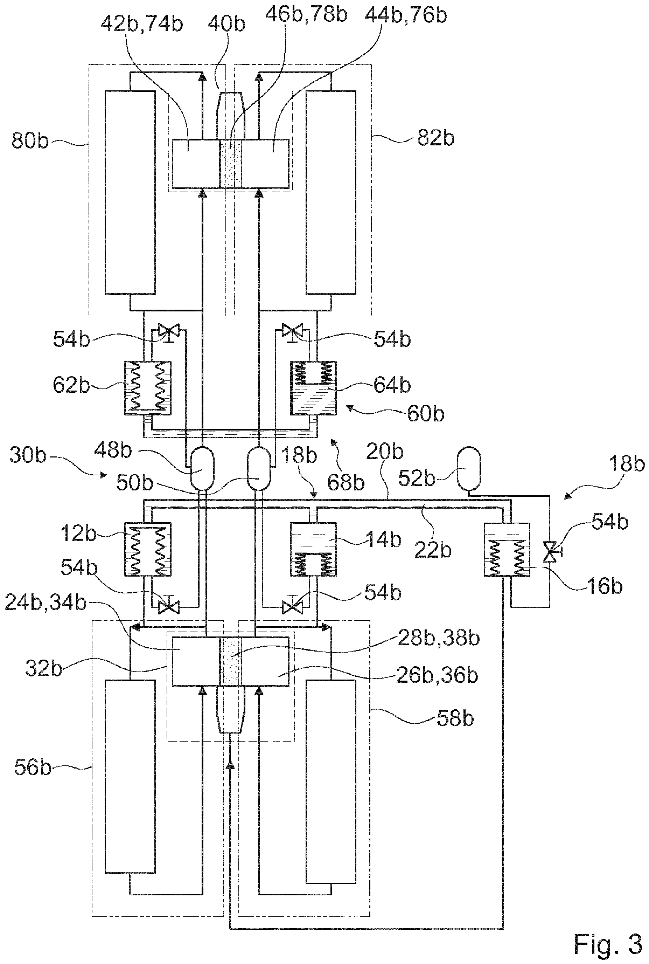

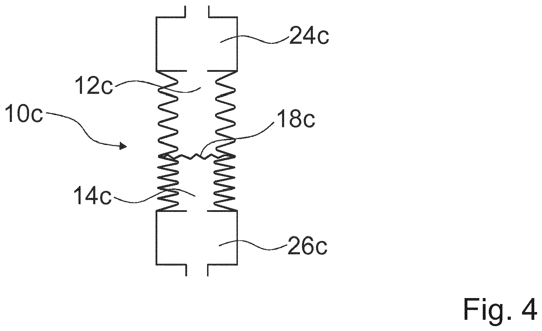

In den Figuren 3 und 4 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2 verwiesen wird. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 und 4 ist der Buchstabe a durch die Buchstaben b bis c ersetzt.

In einer alternativen Ausgestaltung einer als Wasserstoff-Sauerstoff-Redox-Vorrichtung 30b ausgebildeten Redox-Vorrichtung 30b, die eine Redox-Einheit 32b, die zur Durchführung zumindest einer Redoxreaktion unter Erzeugung von einem von Wasserstoffgas gebildeten ersten Gas und von einem von Sauerstoffgas gebildeten zweiten Gas vorgesehen ist und dabei ein von Wasser gebildetes Edukt elektrolytisch spaltet, mit einem ersten Gasraum 34b für das erste Gas und mit einem zweiten Gasraum 36b für das zweite Gas, und einer erfindungsgemäße Druckanpassungseinheit 10b zu einer Anpassung eines Fluiddrucks von dem ersten Gasraum 34b und dem zweiten Gasraum 36b aufweist, weist die Redox-Vorrichtung 30b eine weitere Redox-Einheit 40b mit einem ersten Gasraum 42b und einem zweiten Gasraum 44b, die durch eine elektrolytgefüllte Membran 46b im Wesentlichen getrennt sind, die mit der zumindest einen Redox-Einheit 32b stofflich gekoppelt ist, auf. Die Membran 46b ist ebenfalls mit einer Kaliumhydroxid-Lösung als Elektrolyt gefüllt, die in einem Gefüge der Membran 46b fixiert ist. Die Redox-Einheit 32b und die weitere Redox-Einheit 40b sind als regeneratives Brennstoffzellsystem ausgebildet, wobei die Redox-Einheit 32b als Hochdruck-Elektrolyseur und die weitere Redox-Einheit 40b als Brennstoffzelle ausgebildet sind. In einem Aufladevorgang des regenerativen Brennstoffzellsystems zu einer Energiespeicherung wird mittels eines angelegten äußeren elektrischen Stroms in der als ein Elektrolyseur für Wasserstoff und Sauerstoff ausgebildeten Redox-Einheit 32b Wasser aus einem Wasservorrat in einem Flüssigkeitsspeicher 52b in molekularen Wasserstoff und molekularen Sauerstoff gespalten und entstehender molekulare Wasserstoff und molekularer Sauerstoff jeweils in Gasspeicher 48b, 50b abgeführt wird und in einem Entladevorgang des regenerativen Brennstoffzellsystems wird zu einer Energieabgabe über elektrischen Strom molekularer Wasserstoff und molekularer Sauerstoff in der als Brennstoffzelle ausgebildeten weiteren Redox-Einheit 40b zu Wasser reagieren. Das regenerative Brennstoffzellsystem ist für einen geschlossenen Betrieb ausgebildet, bei dem das regenerative Brennstoffzellsystem über eine Vielzahl von Auflade-Entlade-Zyklen ohne Stoffaustausch mit einer Umgebung betrieben wird. In einem Betrieb der Redox-Vorrichtung 30b werden die Redox-Einheit 32b und die weitere Redox-Einheit 40b abwechselnd betrieben, wobei auch während einer Ruhephase der Redox-Einheit 32b oder der weiteren Redox-Einheit 40b Restgase in Gaskreisläufen 56b, 58b der Redox-Einheit 32b und Gaskreisläufen 80b, 82b der weiteren Redox-Einheit 40b umgewälzt werden, um einen Aufbau von Knallgas zu vermeiden. In den Gaskreisläufen 56b, 58b, 80b, 82b sind dabei nicht dargestellte Elemente zu einer Entfeuchtung und Fremdgasreinigung von Gasströmen der Gaskreisläufe 56b, 58b, 80b, 82b angeordnet. Die Redox-Vorrichtung 30b weist dabei eine weitere Druckanpassungseinheit 60b zu einer Anpassung von Fluiddrücken der zumindest einen weiteren Redox-Einheit 40b auf, wobei die weitere Druckanpassungseinheit 60b und zwei Druckausdehnungselemente 62b, 64b, Teile von Gasräumen 42b, 44b der weiteren Redox-Einheit 40b bilden und auf bereits beschriebene Weise mittels einer Druckkoppeleinheit 68b, die ein Druckübertragungsfluid 72b in einem Druckübertragungsfluidkanal 70b aufweist, die Fluiddrücke in von den Gasräumen 42b, 44b der weiteren Redox-Einheit 40b gebildeten Fluidräumen 74b, 76b, 78b, besonders während einer Anfahrphase oder einer Abschaltphase, anpassen. Die Druckausdehnungselemente 62b, 64b sind als Metallfaltbälge mit einer Federkonstanten von eintausend Newton pro ausgeführt. Die Redox-Einheit 32b und die Druckanpassungseinheit 10b sind analog zu dem ersten Ausführungsbeispiel ausgebildet.

Fig. 4 zeigt eine weitere alternative Ausbildung einer erfindungsgemäßen Druckanpassungseinheit 10c zu einer Anpassung von Fluiddrücken in einem ersten Fluidraum 24c und in zumindest einem zweiten, zumindest im Wesentlichen von dem ersten Fluidraum 24c getrennten Fluidraum 26c innerhalb eines Druckintervalls, insbesondere um einen relativen Überdruck in einem der Fluidräume 24c, 26c zu vermeiden, in einer schematischen Darstellung. Die Druckanpassungseinheit 10c umfasst ein erstes Druckausdehnungselement 12c, das dazu vorgesehen ist, ein Raumvolumen des ersten Fluidraums 24c zu verändern, ein zweites Druckausdehnungselement 14c, das dazu vorgesehen ist, ein Raumvolumen des zweiten Fluidraums 26c zu verändern, und eine Druckkoppeleinheit 18c, die dazu vorgesehen ist, eine Gegenkopplung von Raumvolumenänderungen des zumindest einen ersten Fluidraums 24c und des zumindest einen zweiten Fluidraums 26c zu bewirken. Die Druckkoppeleinheit 18c umfasst eine gemeinsame Wandung des ersten Druckausdehnungselements 12c und des zweiten Druckausdehnungselements 14c. Das erste Druckausdehnungselement 12c und das zweite Druckausdehnungselement 14c sind einstückig miteinander als Metallfaltbälge aus Edelstahl mit einer gemeinsamen Wandung ausgebildet, wobei die gemeinsame Wandung einen Hohlraum in dem ersten Druckausdehnungselement 12c und einen Hohlraum in dem zweiten Druckausdehnungselement 14c voneinander trennt. Eine Druckerhöhung in dem ersten Fluidraum 24c bewirkt eine Ausdehnung des ersten Druckausdehnungselements 12c und verschiebt die gemeinsame Wandung in den Hohlraum des zweiten Druckausdehnungselements 14c, wodurch ein Raumvolumen des zweiten Druckausdehnungselements 14c verringert wird und die Raumvolumenänderung des ersten Fluidraums 24c entgegengesetzt auf den zweiten Fluidraum 26c übertragen wird. Durch eine Verringerung des Raumvolumens des zweiten Fluidraums 26c wird der Fluiddruck in dem zweiten Fluidraum 26c erhöht. Eine Erhöhung des Fluiddrucks in dem zweiten Fluidraum 26c setzt sich solange durch Verschiebung der gemeinsamen Wandung fort, bis die Fluiddrücke in dem ersten Fluidraum 24c und dem zweiten Fluidraum 26c angeglichen sind. Durch die Druckanpassungseinheit 10c wird somit einem Aufbau eines relativen Überdrucks in einem der Fluidräume 24c, 26c rasch entgegengewirkt.

### Bezugszeichen

- 10: Druckanpassungseinheit
- 12: Druckausdehnungselement
- 14: Druckausdehnungselement
- 16: Druckausdehnungselement
- 18: Druckkoppeleinheit
- 20: Druckübertragungsfluidkanal
- 22: Druckübertragungsfluid
- 24: Fluidraum
- 26: Fluidraum
- 28: Fluidraum
- 30: Redox-Vorrichtung
- 32: Redox-Einheit
- 34: Gasraum
- 36: Gasraum
- 38: Membran
- 40: Redox-Einheit
- 42: Gasraum
- 44: Gasraum
- 46: Membran
- 48: Gasspeicher
- 50: Gasspeicher
- 52: Flüssigkeitsspeicher
- 54: Überdruckventil
- 56: Gaskreislauf
- 58: Gaskreislauf
- 60: Druckanpassungseinheit
- 62: Druckausdehnungselement
- 64: Druckausdehnungselement
- 68: Druckkoppeleinheit
- 70: Druckübertragungsfluidkanal
- 72: Druckübertragungsfluid
- 74: Fluidraum
- 76: Fluidraum
- 78: Fluidraum
- 80: Gaskreislauf
- 82: Gaskreislauf

## Patentansprüche

1. Redox-Vorrichtung, insbesondere Wasserstoff-Sauerstoff-Redox-Vorrichtung, mit zumindest einer Redox-Einheit (32a-b), die zur Durchführung zumindest einer Redoxreaktion unter Verbrauch und/oder Erzeugung von einem ersten Gas, insbesondere von Wasserstoffgas, und von einem zweiten Gas, insbesondere von Sauerstoffgas, vorgesehen ist, mit zumindest einem ersten Gasraum (34a-b) für das erste Gas und zumindest einem zweiten Gasraum (36a-b) für das zweite Gas, und mit einer Druckanpassungseinheit (10a-b) zu einer Anpassung von Fluiddrücken in zumindest einem ersten Fluidraum (24a-c, 74b) und in zumindest einem zweiten, zumindest im Wesentlichen von dem ersten Fluidraum (24a-c, 74b) getrennten Fluidraum (26a-c, 76b) innerhalb zumindest eines Druckintervalls, insbesondere zu einer zumindest weitgehenden Vermeidung eines relativen Überdrucks in einem der Fluidräume (24a-c, 26a-c, 74b, 76b), mit zumindest einem ersten Druckausdehnungselement (12a-c, 62b), das dazu vorgesehen ist, ein Raumvolumen des zumindest einen ersten Fluidraums (24a-c, 74b) zu verändern, mit zumindest einem zweiten Druckausdehnungselement (14a-c, 64b), das dazu vorgesehen ist, ein Raumvolumen des zumindest einen zweiten Fluidraums (26a-c, 76b) zu verändern, und mit zumindest einer Druckkoppeleinheit (18a-c, 68b), die dazu vorgesehen ist, eine Gegenkopplung von Raumvolumenänderungen des zumindest einen ersten Fluidraums (24a-c, 74b) und des zumindest einen zweiten Fluidraums (26a-c, 76b) zu bewirken, wobei die Druckkoppeleinheit (18ab, 68b) zumindest ein Druckübertragungsfluid (22a-b, 72b), insbesondere Wasser, umfasst, wobei die Druckkoppeleinheit (18a-c, 68b) einen Druck, der auf das zumindest erste Druckausdehnungselement (12a-c, 62b) wirkt, insbesondere einen Fluiddruck in dem zumindest einen ersten Fluidraum (24a-c, 74b), auf das zweite Druckausdehnungselement (14a-c, 64b) überträgt, wobei der Druck mit einer entgegengesetzten Wirkrichtung übertragen wird, **dadurch gekennzeichnet, dass** das zumindest eine erste Druckausdehnungselement (12a-c, 62b) und das zumindest eine zweite Druckausdehnungselement (14a-c, 64b) als Metallfaltbälge ausgebildet sind, und dass die Redox-Vorrichtung zumindest eine weitere Redox-Einheit (40b), die mit der zumindest einen Redox-Einheit (32b) stofflich gekoppelt ist, und eine weitere Druckanpassungseinheit (60b) zu einer Anpassung von Fluiddrücken der zumindest einen weiteren Redox-Einheit (40b) aufweist.

2. Redox-Vorrichtung nach Anspruch 1, **dadurch gekennzeichnet, dass** die Druckkoppeleinheit (18c) eine gemeinsame Wandung des ersten Druckausdehnungselements (12c) und des zweiten Druckausdehnungselements (14c) umfasst.

3. Redox-Vorrichtung nach einem der vorhergehenden Ansprüche, **gekennzeichnet durch** zumindest ein drittes Druckausdehnungselement (16a-b, 66b), das über die Druckkopplungseinheit (18a-b) mit dem ersten Druckausdehnungselement (12a-c, 62b) und dem zweiten Druckausdehnungselement (14a-c, 64b) gekoppelt ist.

4. Redox-Vorrichtung nach Anspruch 1, **dadurch gekennzeichnet, dass** die Druckanpassungseinheit (10a-b, 60b) zumindest ein drittes Druckausdehnungselement (16a-b, 66b) aufweist, das dazu vorgesehen ist, ein Raumvolumen eines dritten Fluidraums (28a-b) zu verändern.

5. Redox-Vorrichtung nach Anspruch 1, **dadurch gekennzeichnet, dass** die zumindest eine Redox-Einheit (32b) und die zumindest eine weitere Redox-Einheit (40b) als regeneratives Brennstoffzellsystem ausgebildet sind.

6. Verfahren zur Druckregelung unter Verwendung einer Redox-Vorrichtung (10a-c, 60b) nach einem der Ansprüche 1 bis 5.

## Claims

1. Redox device, in particular hydrogen-oxygen redox device, with at least one redox unit (32a-b), which is configured for carrying out at least one redox reaction with consumption and/or production of a first gas, in particular gaseous hydrogen, and of a second gas, in particular gaseous oxygen, with at least one first gas chamber (34a-b) for the first gas and with at least one second gas chamber (36a-b) for the second gas, and with a pressure adjustment unit (10a-b) for an adjustment of fluid pressures in at least one first fluid chamber (24a-c, 74b) and in at least one second fluid chamber (26a-c, 76b), which is at least substantially separate from the first fluid chamber (24a-c, 74b), within at least one pressure interval, in particular for the purpose of at least substantially avoiding a relative overpressure in one of the fluid chambers (24a-c, 26a-c, 74b, 76b),
with at least one first pressure expansion element (12a-c, 62b) configured for modifying a spatial volume of the at least one first fluid chamber (24a-c, 74b), with at least one second pressure expansion element (14a-c, 64b) configured for modifying a spatial volume of the at least one second fluid chamber (26a-c, 76b), and with at least one pressure coupling unit (18a-c, 68b) configured to effect a negative feedback of spatial volume changes of the at least one first fluid chamber (24a-c, 74b) and of the at least one second fluid chamber (26a-c, 76b),
wherein the pressure coupling unit (18a-b, 68b) comprises at least one pressure transmission fluid (22a-b, 72b), in particular water,
wherein the pressure coupling unit (18a-c, 68b) transfers a pressure acting onto the at least one first pressure expansion element (12a-c, 62b), in particular a fluid pressure in the at least one first fluid chamber (24a-c, 74b), onto the second pressure expansion element (14a-c, 64b), wherein the pressure is transferred with an inverse direction of action,
**characterised in that** the at least one first pressure expansion element (12a-c, 62b) and the at least one second pressure expansion element (14a-c, 64b) are embodied as concertina-type metal bellows, and that the redox device comprises at least one further redox unit (40b), which is coupled with the at least one redox unit (32b) by substance-to-substance bond, and comprises a further pressure adjustment unit (60b) for an adjustment of fluid pressures of the at least one further redox unit (40b).

2. Redox device according to claim 1, **characterised in that the** pressure coupling unit (18c) comprises a shared wall of the first pressure expansion element (12c) and the second pressure expansion element (14c).

3. Redox device according to one of the preceding claims, **characterised by** at least one third pressure expansion element (16a-b, 66b), which is coupled with the first pressure expansion element (12a-c, 62b) and the second pressure expansion element (14a-c, 64b) via the pressure coupling unit (18a-b).

4. Redox device according to claim 1, **characterised in that** the pressure adjustment unit (10a-b, 60b) comprises at least one third pressure expansion element (16a-b, 66b), which is configured for modifying a spatial volume of a third fluid chamber (28a-b).

5. Redox device according to claim 1, **characterised in that** the at least one redox unit (32b) and the at least one further redox unit (40b) are embodied as a regenerative fuel cell system.

6. Method for a pressure adjustment, using a redox device (10a-c, 60b) according to one of claims 1 to 5.

## Revendications

1. Dispositif redox, en particulier dispositif redox hydrogène-oxygène, avec au moins une unité redox (32a-b) prévue à réaliser au moins une réaction redox en consommation et/ou génération d'un premier gaz, en particulier hydrogène gazeux, et d'un deuxième gaz, en particulier oxygène gazeux, avec au moins un premier espace de gaz (34a-b) pour le premier gaz et au moins un deuxième espace de gaz (36a-b) pour le deuxième gaz, et avec une unité d'ajustement de pression (10a-b) pour un ajustement des pressions de fluide/fluides dans au moins un premier espace de fluide (24a-c, 74b) et dans au moins un deuxième espace de fluide (26a-c, 76b), lequel est au moins sensiblement séparé du premier espace de fluide (24a-c, 74b), dans au moins un intervalle de pression, en particulier pour au moins largement éviter une relative pression positive dans un des espaces de fluide (24a-c, 26a-c, 74b, 76b), avec au moins un premier élément d'expansion-pression (12a-c, 62b) prévu pour changer un volume spatial de l'au moins un premier espace de fluide (24a-c, 74b), avec au moins un deuxième élément d'expansion-pression (14a-c, 64b) prévu pour changer un volume spatial de l'au moins un deuxième espace de fluide (26a-c, 76b), et avec au moins une unité à couplage pression (18a-c, 68b) prévue pour effectuer une contre-réaction négative de changes de volume spatial de l'au moins un premier espace de fluide (24a-c, 74b) et de l'au moins un deuxième espace de fluide (26a-c, 76b),
l'unité à couplage pression (18a-c, 68b) comprenant au moins un fluide transmetteur de pression (22a-b, 72b), en particulier de l'eau,
l'unité à couplage pression (18a-c, 68b) transférant une pression agissant sur l'au moins un premier élément d'expansion-pression (12a-c, 62b), en particulier une pression fluide dans l'au moins un premier espace de fluide (24a-c, 74b), sur le deuxième élément d'expansion-pression (14a-c, 64b), la pression étant transférée ayant une direction opérative inverse, **caractérisé en ce que** l'au moins un premier élément d'expansion-pression (12a-c, 62b) et l'au moins un deuxième élément d'expansion-pression (14a-c, 64b) sont implémentés comme soufflets pliants en métal, et que le dispositif redox comporte au moins une unité redox additionnelle (40b), laquelle est couplée avec l'au moins une unité redox (32b) en liaison par matière, et comporte une unité d'ajustement de pression additionnelle (60b) pour un ajustement des pressions de fluide/fluides de l'au moins une unité redox additionnelle (40b).

2. Dispositif redox selon la revendication 1, **caractérisé en ce que** l'unité à couplage pression (18c) comporte une paroi commune du premier élément d'expansion-pression (12c) et du deuxième élément d'expansion-pression (14c).

3. Dispositif redox selon l'une quelconque des revendications précédentes, **caractérisé par** au moins un troisième élément d'expansion-pression (16a-b, 66b), lequel est raccordé, par le biais de l'unité à couplage pression (18a-b), avec le premier élément d'expansion-pression (12a-c, 62b) et le deuxième élément d'expansion-pression (14a-c, 64b).

4. Dispositif redox selon la revendication 1, **caractérisé en ce que** l'unité d'ajustement de pression (10a-b, 60b) comporte au moins un troisième élément d'expansion-pression (16a-b, 66b) prévu pour changer un volume spatial d'un troisième espace de fluide (28a-b).

5. Dispositif redox selon la revendication 1, **caractérisé en ce que** l'au moins une unité redox (32b) et l'au moins une unité redox additionnelle (40b) sont implémentées comme système piles-à-combustible régénératif.

6. Procédé pour un ajustement de pression utilisant un dispositif redox (10a-c, 60b) selon l'une quelconque des revendications 1 à 5.
